# EUROPEAN PATENT APPLICATION

(11) **EP 2 262 217 A1**
(43) Date of publication of application: **15.12.2010**
(21) Application number: 09727736.2
(22) Date of filing: 17.03.2009
(51) Int. Cl.: H04M 11/00, H04M 1/82

(54) **COMMUNICATION TERMINAL**

(30) Priority: 04.04.2008 JP 2008098173
(71) Applicant: Sharp Kabushiki Kaisha, Osaka-shi, Osaka 545-8522 (JP)
(72) Inventor: KAWAMURA, Misuzu c/p Sharp Kabushiki Kaisha, Osaka-shi, Osaka 545-8522 (JP)
(74) Representative: Treeby, Philip David William
(86) International application number: PCT/JP2009/055112
(87) International publication number: WO 2009/122894

(57) **Abstract**

A communication terminal 110A that can redial without imposing much emotional burden on the other party of the call even if the call is put on hold and the party who put the call on hold behaves thoughtlessly includes: a control unit 200 substantially implemented by a computer, for central control of communication terminal 110A, and a call communication device 204 for wireless voice communication with another terminal during a call with another terminal, a data communication device 206 for wireless data communication with another terminal and with management server 106, an input device 212 used by the user for operating communication terminal 110A, a time counter 214 for counting date and time, a display device 210, a sound input/output device 208, and a storage 202 for storing various pieces of information, all connected to the control unit 200.

## Description

### TECHNICAL FIELD

The present invention relates to a communication terminal and, more specifically, to a communication terminal having a redialing function.

### Background Art

When a user consecutively makes telephone calls to the same party, in order to reduce burden on a user, the redialing function has been practically used.

One of the redialing functions is to call a telephone number by allowing the user to designate a desired telephone number from call history. Specifically, a telephone number of a party who the user has called once is stored as call history, in the telephone. When the user makes a telephone call to the same party again, the user need not input the telephone number through ten keys, and the telephone makes a call to the telephone number among the call history, in response to a prescribed simple operation by the user such as pressing of a redial button.

From the viewpoint that once a call ends, connection to a terminal that was once connected for a call is reestablished for another call, the redialing function is not limited to the above-described function based on the call history. As one of the redialing functions, a function to call a telephone number by allowing the user to designate a desired telephone number from a received call history has also been practically used. Specifically, when a call from another telephone is received, the telephone number of the said another telephone transmitted from an exchange network is stored as received call history. When the user makes a telephone call to the same party again, the user need not input the telephone number of the said another telephone through ten keys, and the telephone makes a call to the telephone number among the received call history, in response to a prescribed simple operation by the user (Patent Document 1 and Patent Document 2).

Some telephones have an on-hold function for temporarily holding on communication during a call by some cause or other. According to the general on-hold function, the party who is kept on hold must wait doing nothing, until the other party cancels the on-hold state. Further, since the line is connected even during the on-hold, the call charge must also be paid for the on-hold time period. Specifically, the general on-hold function involves two problems, that is, waste of time resource and waste of economical resource.

Therefore, Patent Document 3 proposes a technique for "controlling call on-hold with line disconnection" as will be described in the following.

According to the technique for "controlling call on-hold with line disconnection," first, a telephone stores both call history and received call history as history memory. When a call is put on hold, the telephone disconnects the line to the terminal of the other party. When the on-hold state is canceled, the telephone automatically calls the telephone number of the other party's terminal stored in the history memory, not necessitating the user of the telephone to input the telephone number through ten keys.

Since the line is once disconnected during the on-hold period, the party who is kept on-hold is not tied to the call, and the problem of wasting time resource of the party kept on-hold can be solved. Further, one does not have to pay the call charge for the on-hold period and, therefore, the problem of wasting economical resource is also solved.

The technique described in Patent Document 3 is also a technique for solving the problem of alleviating the load on the user when he/she calls consecutively to the same party using the telephone, which is the object of the above-described redialing function.
[Patent Document 1] Japanese Patent Laying-Open No. 60-210053
[Patent Document 2] Japanese Patent Laying-Open No. 2-305054
[Patent Document 3] Japanese Patent Laying-Open No. 2001-251420

### DISCLOSURE OF THE INVENTION

### PROBLEMS TO BE SOLVED BY THE INVENTION

Different from face-to-face communication, in telephone communication, it is impossible to visually confirm specific changes in the situation surrounding the other party. Therefore, one must behave determining the situation of the other party based only on the conversation through the telephone.

Assume, for example, that while a user is very much enjoying a long call chatting with a friend, the doorbell rings and a sudden visitor comes. Here, the user wants to continue the telephone communication. Considering that the visitor must be a door-to-door sales person, it is often the case that the user keeps on hold the call leaving the following message and attends the visitor.

"There is someone at the door. Please hold on."
However, the visitor is an old friend who came for a first time in years. In such a situation, the user may be lost in conversation with the visitor, excited by the visit after a long time and tugged by the memories. Then, the user may forget the telephone call that was put on hold. When he/she remembers, the line would have been already disconnected and, it is likely that the other party of telephone call became sour and will not respond even if the user calls again.

Such a careless behavior may be avoided if the user who puts the call on-hold becomes more responsible. Different from business situations, however, it is rather rare in daily telephone communication of simple chats to put a call on hold with sufficient attention, considering all possible situations. The reason for this is that in business use, the other party of a call is generally a client and, therefore, one always takes care not to be disrespectful to the other party. In private telephone conversation with a friend, however, one tends to be careless.

The same problem arises in the technique described in Patent Document 3. Though wastes of time resource and economical resource are both reduced by the technique of Patent Document 3, the calling/called party tends to forget that the call is being on-hold, since he/she recognizes that the line is disconnected in the on-hold period. Therefore, as compared with the typical on-hold function, it is more likely for the user to be careless.

From the viewpoint of the party who is put on-hold, though the waste of time resource can be reduced by the technique described in Patent Document 3, whether or not the conversation can be continued after the on-hold state is canceled depends on the attention paid by the party who is put on-hold. When the on-hold function according to Patent Document 3 is used, it is expected that the user who puts a call on hold leaves the following message, and then on-hold starts.

"Let's continue this. I'll call you later."
In such a situation, the party who is put on hold may be required not to act in self-centered manner even though the line is disconnected, and he/she should refrain from answering a call from a third party or calling a third party. If the party who is kept on hold does not act as described above, different from the situation in which the party who put the call on hold forgets to attend to the other party who is kept on hold, a situation that makes sour the party who put the call on hold will be experienced. Namely, even though the party who put the call on hold makes telephone calls time and again later, he/she cannot get a connection to the other party. Such a situation also comes from careless behavior, and it is often experienced in daily telephone communication of simple chats.

Further, the function of once disconnecting the line in the on-hold period as described in Patent Document 3 makes one's telephone untied to the other terminal. Specifically, the telephone of the user is physically separated from the other terminal. From the viewpoint that a device such as a telephone is physically untied from other terminal, the technique described in Patent Document 3 will be expanded in the future. At the same time, however, different from a communication function of electronic chatting and e-mails in which the users are aware that reply from the other party is not always expected even when one sends a message, call function using a telephone or the like requires real-time response. Specifically, when the line is once disconnected in the on-hold period, though the telephone of the user is physically untied from the terminal of the other party, the party who is kept on hold must always keep in mind that the on-hold state will be canceled sometime by the other party and that until the on-hold state is canceled, he/she must refrain from making or receiving a telephone call to/from a third party. If a party is left unattended with the call kept on hold, the party is kept in an unsettling state for a long time. Such a situation is very stressful for the party who is kept on-hold. Such a situation must be avoided.

Therefore, an object of the present invention is to provide a communication terminal that can resume a call without imposing much emotional burden on the other party of the call, even if the call is put on hold and the party who put the call on hold behaves thoughtlessly.

Another object of the present invention is to provide a communication terminal by which the party who put a call on hold and the party who is kept on hold are not kept in emotionally unsettling states, even if a call is put on-hold and the party who put the call on hold behaves thoughtlessly and leaves the call unattended.

### MEANS FOR SOLVING THE PROBLEMS

According to a first aspect, the present invention provides a communication terminal, including: a storage; calling means for allowing a user to make and receive a call to/from other terminal; communicating means for communicating with other terminal; identifier storing means for storing an identifier of other terminal with which a call through the calling means has ended, in the storage; call control means, responsive to an instruction from the user, for controlling the calling means to enable a call with the other terminal corresponding to the identifier stored in the storage; state obtaining means for obtaining a state of the other terminal corresponding to the identifier stored in the storage through the communicating means; notifying means for notifying the user of the state obtained by the state obtaining means; and validating means for validating or invalidating the call control means in accordance with the state obtained by the state obtaining means.

The identifier storing means stores the identifier of the terminal of the other party of the call in a storage, and the call control means enables a call with the terminal corresponding to the identifier stored in the storage, in response to a user instruction. The state obtaining means obtains the state of the terminal corresponding to the identifier stored in the storage, and the notifying means notifies the user of the state obtained by the state obtaining means. The validating means validates or invalidates the call control means depending on the state obtained by the state obtaining means.

If a call is once terminated, the identifier storing means stores the identifier of the other party's terminal in the storage, and the notifying means notifies the user of the state of the other party's terminal. Therefore, based on the state notified by the notifying means, it is possible for the user to constantly know when to resume the call to the other party's terminal. Thus, emotional burden both on the user of the communication terminal and the user of the other terminal can be alleviated. Therefore, a communication terminal that can redial without imposing much emotional burden on the other party of the call, even if the call is put on hold and the party who put the call on hold behaves thoughtlessly, can be provided.

Preferably, the communication terminal further includes a housing containing the storage, the calling means, the communicating means, the identifier storing means, the call control means, the state obtaining means, the notifying means and the validating means. The notifying means includes a first light source unit, provided on the housing and capable of emitting light to the outside of the housing, and light emission control means for changing color of light emitted by the first light source unit in accordance with the state obtained by the state obtaining means.

Preferably, the state obtaining means includes transition signal obtaining means for obtaining a state transition signal through the communicating means from the other terminal corresponding to the identifier stored in the storage, indicating that the state of the other terminal has toggled between a state in which a call to/from the communication terminal is possible and a state in which the call is impossible.

More preferably, the light emission control means includes means, responsive to the transition signal obtaining means obtaining the state transition signal, for changing the color of light emitted by the first light source unit, depending on whether the other terminal as the transmission source of the state transition signal is in a state in which a call to/from the communication terminal is possible or in a state in which the call is impossible.

More preferably, the first light source unit is capable of switching between two colors of light to be emitted. The means for changing includes means, responsive to the transition signal obtaining means obtaining the state transition signal, for causing the first light source unit to emit light with the two colors switched, depending on whether or not the other terminal as the transmission source of the state transition signal is in a state in which a call to/from the communication terminal is possible.

More preferably, the communication terminal further includes a second light source unit, provided on the housing and capable of emitting light to the outside of the housing, and means for changing the color of light emitted by the second light source unit, depending on whether or not the communication terminal is in a state in which a call to/from the other terminal corresponding to the identifier is possible, while the identifier is stored in the storage.

More preferably, the communication terminal further includes: time counting and determining means for determining whether a prescribed time period has passed from when the identifier storing means stored the identifier in the storage; and means for invalidating the call control means, and for turning off the first and second light source units, in accordance with the result of determination by the time counting and determining means.

Preferably, the state obtaining means includes transition signal obtaining means for obtaining a state transition signal through the communicating means from the other terminal corresponding to the identifier stored in the storage, indicating that the state of the other terminal has toggled between a state in which a call to/from the communication terminal is possible and a state in which the call is impossible.

More preferably, the validating means includes means for validating or invalidating the call control means, depending on whether the state transition signal obtained by the transition signal obtaining means indicates that the state of the other terminal has toggled from the state in which a call to/from the communication terminal is impossible to the state in which the call is possible.

More preferably, the communication terminal further includes own terminal state notifying means for notifying the user whether or not the communication terminal is in a state in which a call to/from the other terminal corresponding to the identifier is possible or in a state in which the call is impossible while the identifier is stored in the storage.

More preferably, the own terminal state notifying means includes means, responsive to a start of a call by the user to/from a terminal different from the other terminal corresponding to the identifier using the calling means while the identifier is stored in the storage, for notifying the user that the communication terminal is in a state in which a call to/from the other terminal corresponding to the identifier is impossible.

More preferably, the communication terminal further includes means, responsive to a start of a call by the user to/from a terminal different from the other terminal corresponding to the identifier using the calling means while the identifier is stored in the storage, for transmitting to the other terminal corresponding to the identifier, a state transition signal indicating that the state of the communication terminal has toggled from a state in which a call to/from the other terminal corresponding to the identifier is possible to a state in which the call is impossible.

More preferably, the communication terminal further includes: time counting and determining means for determining whether a prescribed time period has passed from when the identifier storing means stored the identifier in the storage; and means for invalidating the call control means in accordance with the result of determination by the time counting and determining means.

More preferably, the communication terminal further includes means for notifying the user of the result of determination by the time counting and determining means.

According to a second aspect, the present invention provides a communication terminal, including: a storage; calling means for allowing a user to make and receive a call to/from other terminal; identifier storing means for storing an identifier of other terminal with which a call through the calling means has ended, in the storage; call control means, responsive to an instruction from the user, for controlling the calling means to enable a call with other terminal corresponding to the identifier stored in the storage; time counting means for determining whether a prescribed time period has passed from when the identifier storing means stored the identifier in the storage; notifying means for notifying the user of the result of determination by the time counting means; and means for validating or invalidating the call control means in accordance with the result of determination by the time counting means.

The identifier storing means stores the identifier of the other party of the call in a storage, and the call control means enables a call with the terminal corresponding to the identifier stored in the storage, in response to a user instruction. The time counter means determines whether or not a prescribed time period has passed from the time when the identifier was stored in the identifier storing means, and the notifying means notifies the user of the result of determination by the time counter means. The validating or invalidating means validates or invalidates the call control means in accordance with the result of determination by the time counter means.

When a call once ends, the time counter means determine whether or not a prescribed time period has passed from the end of the call, and the control means validates or invalidates the call control means in accordance with the result of determination by the time counter means. Therefore, if a call ends and the on-hold state begins, the user need not be kept for a long period in the emotionally unsettling state, in which he/she must keep in mind to refrain a call with a third party. As a result, a communication terminal by which the party who put a call on hold and the party who is kept on hold are not kept in emotionally unsettling states, even if a call is put on-hold and the party who put the call on hold behaves thoughtlessly and leaves the call unattended, can be provided.

### EFFECTS OF THE INVENTION

As described above, according to the present invention, even when a call is once terminated, the communication terminal stores the identifier of the terminal of the other party of the call, and notifies the user of the state of the other party's terminal. Therefore, based on the notified state, it is possible for the user to constantly know when to resume the call to the other party's terminal. Thus, emotional burden both on the user of the communication terminal and the user of the other terminal can be alleviated.

Further, the communication terminal determines whether or not a prescribed time has passed from when the call with the other terminal once ends, and resumes the call with the other party in accordance with the result of determination. Therefore, if a call ends and the on-hold state begins, the user need not be kept for a long period in the emotionally unsettling state, in which he/she must keep in mind to refrain a call with a third party.

As a result, a communication terminal by which the party who put a call on hold and the party who is kept on hold are not kept in emotionally unsettling states, even if a call is put on-hold and the party who put the call on hold behaves thoughtlessly and leaves the call unattended, can be provided.

### BRIEF DESCRIPTION OF THE DRAWINGS

Fig. 1 shows a network environment of a system including a communication terminal 110A in accordance with an embodiment of the present invention.
Fig. 2 is a perspective view showing an appearance of communication terminal 110A shown in Fig. 1.
Fig. 3 is a block diagram of communication terminal 110A shown in Fig. 1.
Fig. 4 shows a list of variables stored in a system variable storage unit 216 shown in Fig. 3.
Fig. 5 shows a list of message data transmitted/received by communication terminal 110A.
Fig. 6 is a flowchart representing a control structure of a computer program realizing a function of communication terminal 110A.
Fig. 7 is a flowchart representing a control structure of a computer program realizing a function of communication terminal 110A.
Fig. 8 is a flowchart representing a control structure of a computer program realizing a function of communication terminal 110A.
Fig. 9 is a flowchart representing a control structure of a computer program realizing a function of communication terminal 110A.
Fig. 10 is a flowchart representing a control structure of a computer program realizing a function of communication terminal 110A.

### DESCRIPTION OF THE REFERENCE SIGNS

100 system, 102 telephone line network, 104 the Internet, 106 management server, 108 DB, 110, 110A, 110B communication terminal, 112 first base station, 114 second base station, 116, 116A, 116B telephone terminal, 200 control unit, 202 storage, 204 call communication device, 206 data communication device, 206 sound input/output device, 210 display device, 212 input device, 214 time counter, 216 system variable storage unit.

### BEST MODES FOR CARRYING OUT THE INVENTION

In the following, embodiments of the present invention will be described in detail, with reference to the figures. In the description of embodiments below, the same components are denoted by the same reference characters. Their functions and names are also the same. Therefore, detailed description thereof will not be repeated.

### [Network Environment]

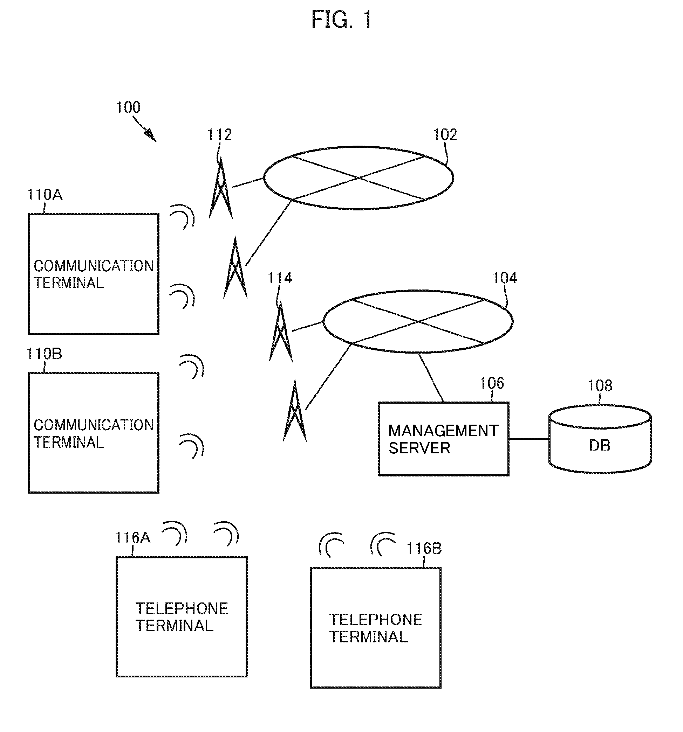

Fig. 1 schematically shows a configuration of a system 100 including a communication terminal in accordance with an embodiment of the present invention. Referring to Fig. 1, system 100 includes: a management server 106 connected to the Internet 104 and responsive to a request from an apparatus connected to the Internet 104, for controlling data transmission/reception between the apparatus and another apparatus connected to the Internet 104; and a DB 108 connected to management server 106 for storing various pieces of information of apparatuses connected to the Internet 104.

System 100 further includes communication terminals 110A and 110B, connected through a first base station 112 and a second base station 114 to a telephone line network 102 and to the Internet 104, respectively, and having a communication function of data transmission/reception with other apparatuses connected to the Internet 104, a call function of making and receiving calls to and from other apparatuses connected to telephone line network 102, and the redialing function.

In the present embodiment, the redialing function refers to a function of notifying, after a call with another terminal is disconnected, the user of the state of the said another terminal, and in accordance with the state of the said another terminal, of allowing the user to resume the call with the said another terminal.

System 100 further includes telephone terminals 116A and 116B, which are portable telephones, connected through the first base station 112 and the second base station 114 to a telephone line network 102 and to the Internet 104, respectively, and not having the redialing function of communication terminals 110A and 110B.

### [Configuration of Communication Terminal 110A]

### (Appearance of Communication Terminal 110A)

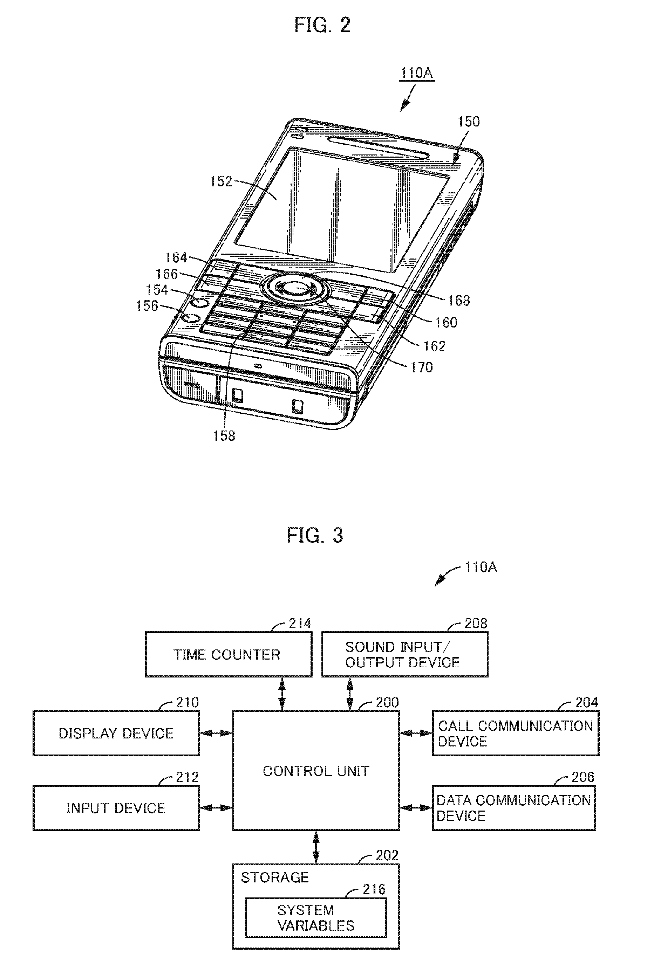

Fig. 2 is a perspective view showing an appearance of communication terminal 110A. Referring to Fig. 2, communication terminal 110A is a portable telephone, having a housing 150 of a flat, rectangular parallelepiped shape, a display 152 arranged on an upper half of a top surface of housing 150, and a first LED (Light Emitting Diode) 154 and a second LED 156, arranged on a lower left side of the top surface of housing 150.

Communication terminal 110A further includes: a cursor key 168 arranged directly below display 152 and operated for moving a cursor displayed on display 152 upward/downward and to the light/left; an OK button 170 arranged inside the cursor key 168; a cut off button 160 arranged on the right side of cursor key 168 and operated to end a call; and a power button 162 arranged below cut off button 160 and operated to turn the power on/off. Communication terminal 110A further includes: a call button 164 arranged on the left side of cursor key 168 and operated for starting a call; a call resuming button 166 arranged below call button 164 and operated for redialing; and ten keys 158 arranged directly below cursor key 168 and operated to input access codes, characters and the like such as telephone numbers and mail addresses.

### (Functional Configuration of Communication Terminal 110A)

Fig. 3 is a block diagram showing a functional configuration of communication terminal 110A. Referring to Fig. 3, communication terminal 110A includes a control unit 200 substantially implemented by a computer, for central control of communication terminal 110A, and a call communication device 204 for wireless voice communication with another terminal during a call with the said another terminal, a data communication device 206 for wireless data communication with another terminal and with management server 106, an input device 212 used by the user for operating communication terminal 110A, a time counter 214 for counting date and time, a display device 210, a sound input/output device 208, and a storage 202 for storing various pieces of information, all connected to control unit 200.

Each of call communication device 204 and data communication device 206 includes an antenna, an RF (Radio Frequency) unit, a modulator unit and a demodulator unit, not shown. Input device 212 includes cut off button 160, power button 162, call button 164, call resuming button 166, cursor key 168, OK button 170 and ten keys 158 shown in Fig. 2. Display device 210 includes display 152, first LED 154 and second LED 156 shown in Fig. 2. Sound input/output device 208 includes a microphone, a sound input data processing unit, a speaker and a sound output data processing unit.

Storage 202 includes system variable storage unit 216 for storing variables used internally by a program realizing the functions of control unit 200.

### (Configuration of System Variable Storage Unit 216)

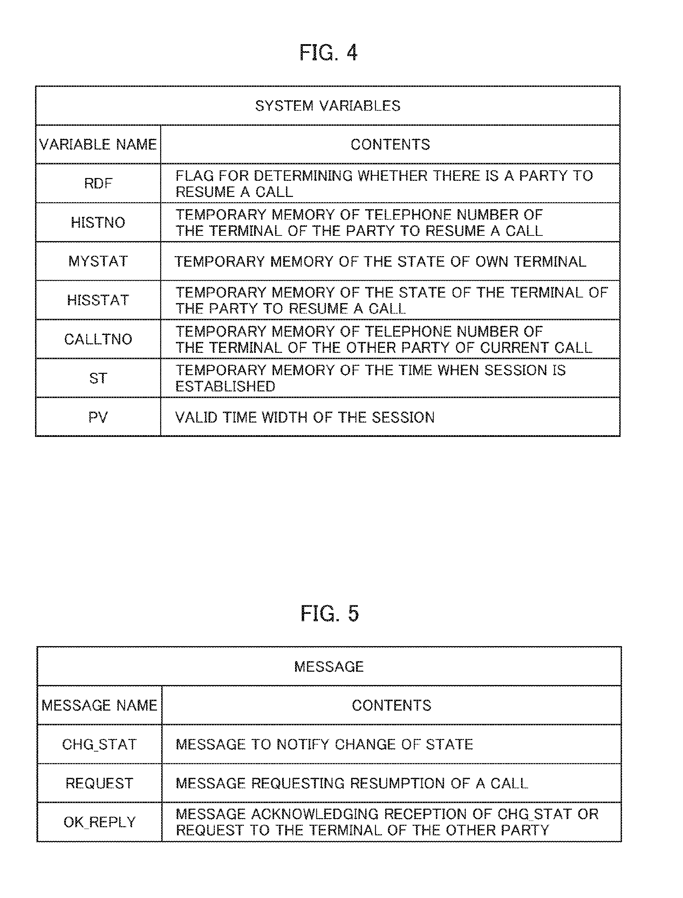

Fig. 4 shows a list of variables stored in system variable storage unit 216. Referring to Fig. 4, system variable storage unit 216 includes areas for storing a variable RDF as a flag for determining whether or not there is any communication terminal to resume a call, a variable HISTNO for storing a telephone number of the communication terminal to resume a call, and a variable MYSTAT for storing, by a numerical value, whether or not communication terminal 110A can resume a call to the communication terminal identified by the telephone number stored in variable HISTNO. System variable storage unit 216 further includes areas for storing a variable HISSTAT for storing, by a numerical value, whether or not the communication terminal identified by the telephone number stored in variable HISTNO can resume a call with communication terminal 110A, a variable CALLTNO for storing a telephone number of another communication terminal currently having a call with communication terminal 110A, a variable ST for storing either a session start time or a session update time established by control unit 200, and a variable PV for storing a valid time width of the session.

Either 0 or 1 is stored in variables RDF, MYSTAT and HISSTAT.

If there is no other communication terminal to resume a call, the value of variable RDF is set to 0. If there is another communication terminal to resume a call, the value of variable RDF is set to 1.

If communication terminal 110A is in a state ready to resume a call with the communication terminal identified by the telephone number stored in variable HISTNO, the value of variable MYSTAT is set to 1, and if communication terminal 110A is in a state not ready to resume a call with the communication terminal identified by the telephone number stored in variable HISTNO, the value of variable MYSTAT is set to 0. If the communication terminal identified by the telephone number stored in variable HISTNO is in a state ready to resume a call with communication terminal 110A, the value of variable HISSTAT is set to 1, and if the communication terminal identified by the telephone number stored in variable HISTNO is in a state not ready to resume a call with communication terminal 110A, the value of variable HISSTAT is set to 0.

Either the time or NULL is stored in variable ST. When a session is established by control unit 200, either a session start time or a session update time is stored in variable ST. If a session is not established, NULL is stored in variable ST.

If there is a terminal of a party to resume a call, the first and second LEDs 154 and 156 correspond to the variables MYSTAT and HISSTAT, respectively. If there is a terminal of a party to resume a call and the value of variable MYSTAT is 0, the first LED 154 emits red light and if the value of MYSTAT is 1, the first LED 154 emits blue light. If there is a terminal of a party to resume a call and the value of variable HISSTAT is 0, the second LED 156 emits red light and if the value of HISSTAT is 1, the second LED 156 emits blue light.

By looking at the colors of first and second LEDs 154 and 156, the user can confirm the state of the communication terminal 110A and of the terminal of the other party to resume a call.

If there is no terminal of a party to resume a call, the first and second LEDs 154 and 156 are turned off.

In the present embodiment, it is assumed that communication terminal 110B has a configuration similar to that of communication terminal 110A.

### [Message Data]

Fig. 5 is a list of message data that is a data transmitted/received between communication terminal 110A and a communication terminal having a configuration similar to that of communication terminal 110A, on the Internet 104. Referring to Fig. 5, the message data includes a message data "CHG_STAT" notifying another communication terminal of a state transition of whether or not it is possible to resume a call, a message data "REQUEST" requesting another communication terminal to resume a call, and a message data "OK_REPLY", responsive to reception of either CHG_STAT or REQUEST from another terminal, for acknowledging the reception to the said another terminal.

### [Software Configuration]

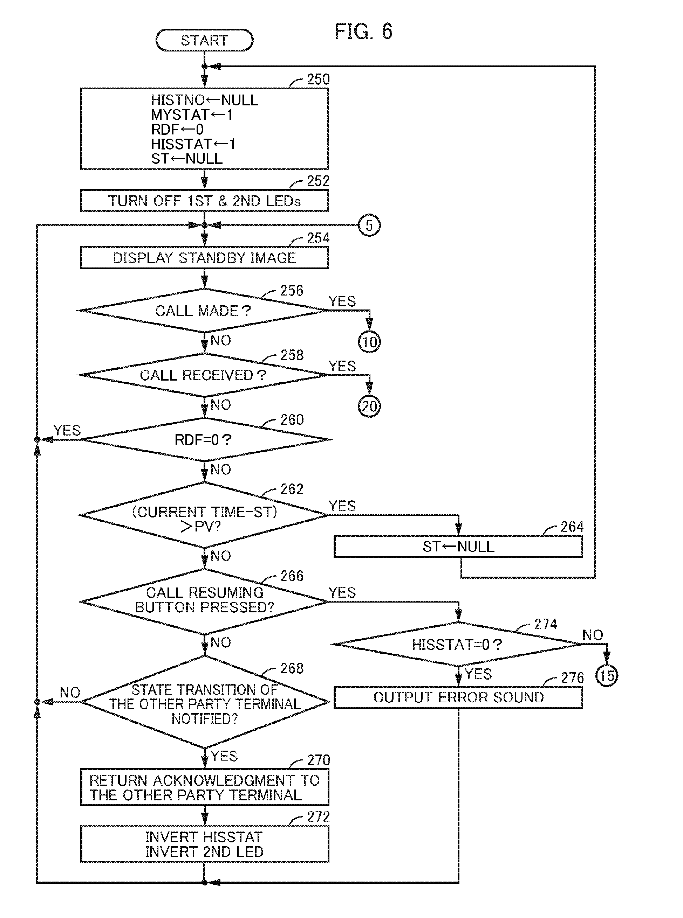

Figs. 6 to 10 are flowcharts representing control structures of a program executed by communication terminal 110A. Functions of communication terminal 110A are realized by control unit 200 substantially implemented by a computer, executing the program.

Referring to Fig. 6, the program includes: a step 250 of inputting NULL, 1, 0, 1 and NULL to variables HISTNO, MYSTAT, RDF, HISSTAT and ST, respectively; a step 252, following step 250, of turning off the first and second LEDs 154 and 156; a step 254, following step 252, of displaying a standby image on display 152; and a step 256, following step 254, of determining whether or not the user of communication terminal 110A issued a call instruction to another terminal connected to telephone line network 102, and branching control flow depending on the result of determination.

The program further includes: a step 258, executed if the result of determination at step 256 is NO, of determining whether or not there is an incoming call from any other terminal connected to telephone line network 102, and branching control flow depending on the result of determination; a step 260, executed if the result of determination at step 258 is NO, of determining whether or not the value of variable RDF is 0, and branching control flow depending on the result of determination; and a step 262, executed if the result of determination at step 260 is NO, of determining whether or not the time width obtained by subtracting the time of variable ST from the current time is larger than the time width of variable PV, and branching control flow depending on the result of determination.

At step 262 described above, after the session is established, whether the valid session time has passed or not is determined.

The program further includes: a step 264, executed if the result of determination at step 262 is YES, of inputting NULL to variable ST, and returning the control to step 250; a step 266, executed if the result of determination at step 262 is NO, of determining whether or not the call resuming button 166 is pressed by the user, and branching control flow depending on the result of determination; and a step 268, executed if the result of determination at step 266 is NO, of determining whether or not CHG_STAT has been received from the communication terminal identified by the telephone number HISTNO, and branching control flow depending on the result of determination.

The process of step 264 means that the established session is discarded.

The program further includes: a step 270, executed if the result of determination at step 268 is YES, of transmitting OK_REPLY to the communication terminal identified by the telephone number HISTNO; and a step 272, following step 270, of toggling the value of variable HISSTAT between 0 and 1, and toggling the color of second LED 156 between blue and red, and returning the control to step 254.

The program further includes: a step 274, executed if the result of determination at step 266 is YES, of determining whether or not the value of variable HISSTAT is 0, and branching control flow depending on the result of determination, and a step 276, executed if the result of determination at step 274 is YES, of outputting an error sound and returning the control to step 254.

If the results of determination at steps 260 and 268 are YES and NO, respectively, the control returns to step 254.

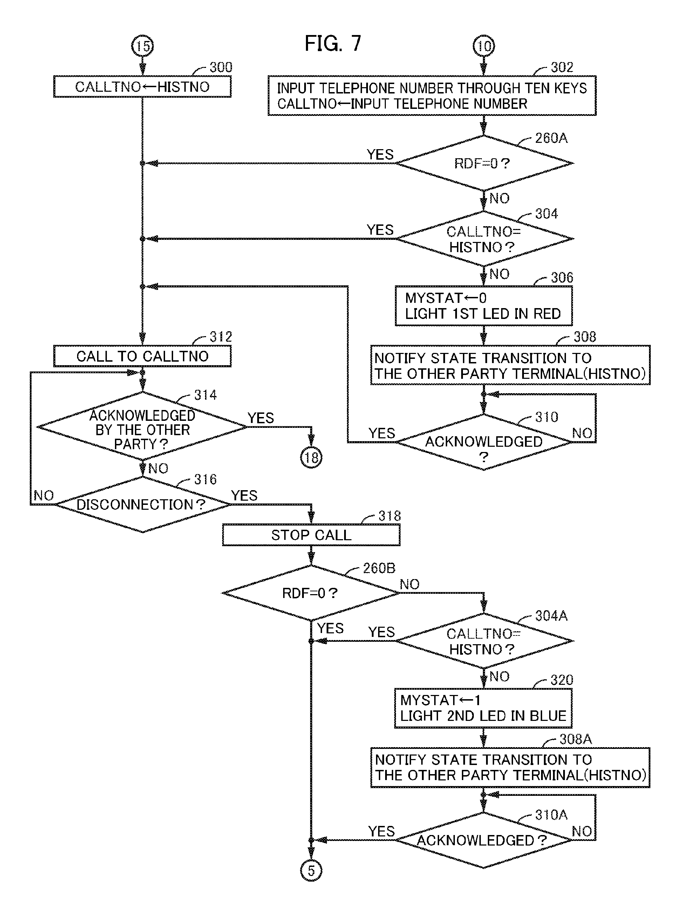

Referring to Fig. 7, the program further includes: a step 300, executed if the result of determination at step 274 shown in Fig. 6 is NO, of inputting the telephone number HISTNO to variable CALLTNO; a step 302, executed if the result of determination at step 256 shown in Fig. 6 is YES, of inputting a telephone number input by the user pressing ten keys 158 to variable CALLTNO; a step 260A, following step 302, of determining whether or not the value of variable RDF is 0, and branching control flow depending on the result of determination; and a step 304, executed if the result of determination at step 260A is NO, of determining whether or not the telephone number CALLTNO and the telephone number HISTNO are the same, and branching control flow depending on the result of determination.

The program further includes: a step 306, executed if the result of determination at step 304 is NO, of inputting 0 to variable MYSTAT, and setting the color of first LED 154 to red; a step 308, following step 306, of transmitting CHG_STAT to the communication terminal identified by the telephone number HISTNO; and a step 310, following step 308, of waiting until OK_REPLY is received from the communication terminal identified by the telephone number HISTNO.

The program further includes: a step 312 executed, after step 300, if the result of determination at step 260A or step 304 is YES, or if OK_REPLY is received at step 310, of making a call to the terminal identified by the telephone number CALLTNO; a step 314, following step 312, of determining whether there is a response from the terminal called at step 312, and branching control flow depending on the result of determination; and a step 316, executed if the result of determination at step 314 is NO, of determining whether or not the cut off button 160 is pressed by the user, and branching control flow depending on the result of determination.

The program further includes: a step 318, executed if the result of determination at step 316 is YES, of stopping the call; a step 260B, following step 318, of determining whether or not the value of variable RDF is 0, and branching control flow depending on the result of determination; a step 304A, executed if the result of determination at step 260B is NO, of determining whether or not the telephone number CALLTNO is the same as telephone number HISTNO, and branching control flow depending on the result of determination; and a step 320, executed if the result of determination at step 304A is NO, of setting the value of variable MYSTAT and the color of second LED 156 to 1 and blue, respectively.

The program further includes: a step 308A, following step 320, of transmitting CHG_STAT to the communication terminal identified by the telephone number HISTNO; and a step 310A, following step 308A, of waiting until OK_REPLY is received from the communication terminal identified by the telephone number HISTNO.

If the result of determination at step 316 is NO, the control returns to step 314. If the result of determination at step 260B or step 304A is YES, or OK_REPLY is received at step 310A, the control returns to step 254 shown in Fig. 6.

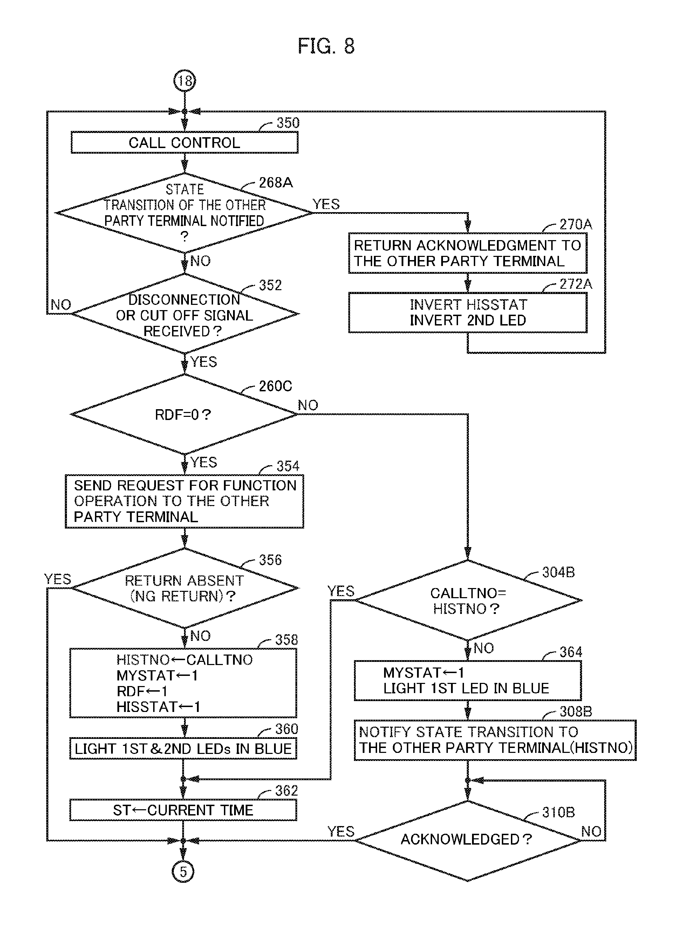

Referring to Fig. 8, the program further includes: a step 350, executed if the result of determination at step 314 shown in Fig. 7 is YES, of executing a normal call function of a portable telephone for making a call to the terminal identified by the telephone number CALLTNO; a step 268A, following step 350, of determining whether or not CHG_STAT is received from the communication terminal identified by the telephone number HISTNO, and branching control flow depending on the result of determination; a step 352, executed if the result of determination at step 268A is NO, of determining whether or not the user pressed the cut off button 160, or whether or not the terminal identified by the telephone number CALLTNO requested disconnection, and branching control flow depending on the result of determination.

The program further includes: a step 270A, executed if the result of determination at step 268A is YES, of transmitting OK_REPLY to the communication terminal identified by the telephone number HISTNO; and a step 272A, following step 270A, of toggling the value of variable HISSTAT between 0 and 1 and toggling the color of second LED 156 between blue and red, and returning the control to step 350.

The program further includes: a step 260C, executed if the result of determination at step 352 is YES, of determining whether or not the value of variable RDF is 0, and branching control flow depending on the result of determination; a step 354, executed if the result of determination at step 260C is YES, of transmitting REQUEST to the terminal identified by the telephone number CALLTNO; a step 356, following step 354, of determining whether or not OK_REPLY is received from the terminal identified by the telephone number CALLTNO, and branching control flow depending on the result of determination; a step 358, executed if the result of determination at step 356 is NO, of inputting telephone number CALLTNO, 1, 1 and 1 to variables HISTNO, MYSTAT, RDF and HISSTAT, respectively; a step 360, following step 358, of setting colors of first and second LEDs 154 and 156 both to blue; and a step 362, following step 360, of inputting the current time to variable ST, and returning the control flow to step 254 shown in Fig. 6.

The process of step 362 described above means either establishment of a session or an update of an established session is performed.

The program further includes: a step 304B, executed if the result of determination at step 260C is NO, of determining whether the telephone number CALLTNO is the same as telephone number HISTNO, and branching control flow depending on the result of determination; a step 364, executed if the result of determination at step 304B is NO, of setting the value of variable MYSTAT and the color of first LED 154 to 1 and blue, respectively; a step 308B, following step 364, of transmitting CHG_STAT to the communication terminal identified by the telephone number HISTNO; and a step 310B, following step 308B, of waiting until OK_REPLY is received from the communication terminal identified by the telephone number HISTNO.

If the result of determination at step 352 is NO, the control returns to step 350. If the result of determination at step 304B is YES, the control proceeds to step 362. If the result of determination at step 356 is YES, or OK_REPLY is received at step 310B, the control returns to step 254.

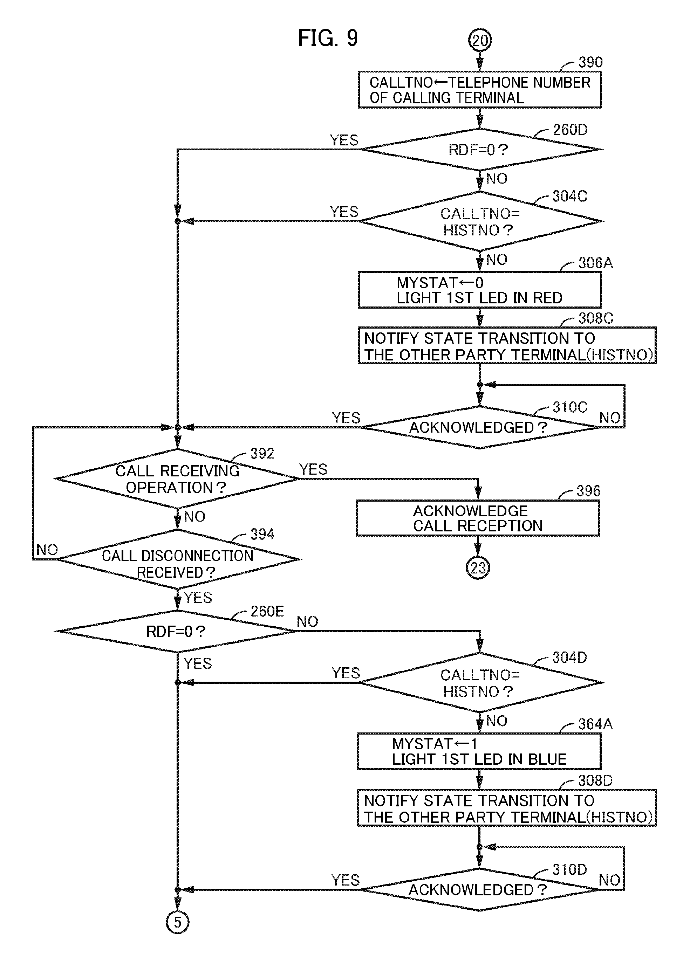

Referring to Fig. 9, the program further includes: a step 390, executed if the result of determination at step 258 is YES, of inputting the telephone number of the terminal that made a telephone call to communication terminal 110A to variable CALLTNO; a step 260D, following step 390, of determining whether or not the value of variable RDF is 0, and branching control flow depending on the result of determination; a step 304C, executed if the result of determination at step 260D is NO, of determining whether the telephone number CALLTNO is the same as telephone number HISTNO, and branching control flow depending on the result of determination; a step 306A, executed if the result of determination at step 304C is NO, of inputting 0 to variable MYSTAT, and setting the color of first LED 154 to red; a step 308C, following step 306A, of transmitting CHG_STAT to the communication terminal identified by telephone number HISTNO; and a step 310C, following step 308C, of waiting until OK_REPLY is received from the communication terminal identified by the telephone number HISTNO.

The program further includes: a step 392, executed if the result of determination at step 260D or step 304C is YES, or if OK_REPLY is received at step 310C, of determining whether or not the user pressed the call button 164, and branching control flow depending on the result of determination; a step 396, executed if the result of determination at step 392 is YES, of acknowledging a call reception to the terminal identified by the telephone number CALLTNO; and a step 394, executed if the result of determination at step 392 is NO, of determining whether or not a signal to stop a call to communication terminal 110A is received from the terminal identified by the telephone number CALLTNO, and branching control flow depending on the result of determination.

The program further includes: a step 260E, executed if the result of determination at step 394 is YES, of determining whether or not the value of variable RDF is 0, and branching control flow depending on the result of determination; a step 304D, executed if the result of determination at step 260E is NO, of determining whether the telephone number CALLTNO is the same as telephone number HISTNO, and branching control flow depending on the result of determination; a step 364A, executed if the result of determination at step 304D is NO, of inputting 1 to variable MYSTAT, and setting the color of first LED 154 to blue; a step 308D, following step 364A, of transmitting CHG_STAT to the communication terminal identified by telephone number HISTNO; and a step 310D, following step 308D, of waiting until OK_REPLY is received from the communication terminal identified by the telephone number HISTNO.

If the result of determination at step 394 is NO, the control returns to step 392. If the result of determination at step 260E or step 304D is YES, or OK_REPLY is received at step 310D, the control returns to step 254.

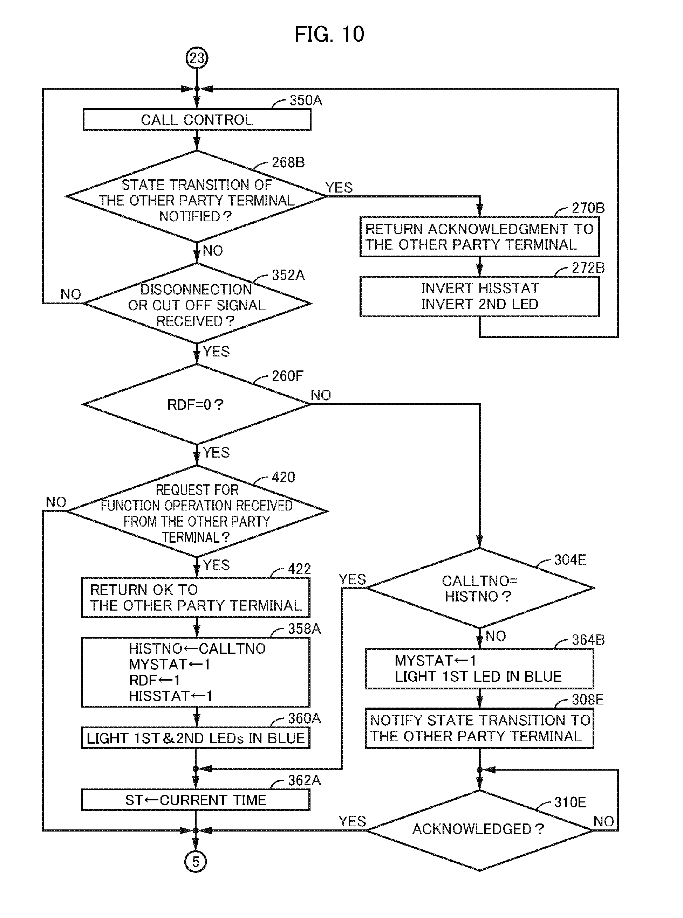

Referring to Fig. 10, the program further includes: a step 350A, following step 396 shown in Fig. 9, of executing a normal call function of a portable telephone for making a call to the terminal identified by the telephone number CALLTNO; a step 268B, following step 350A, of determining whether or not CHG_STAT is received from the communication terminal identified by the telephone number HISTNO, and branching control flow depending on the result of determination; a step 352A, executed if the result of determination at step 268B is NO, of determining whether or not the user pressed the cut off button 160, or whether or not the terminal identified by the telephone number CALLTNO requested disconnection, and branching control flow depending on the result of determination.

The program further includes: a step 270B, executed if the result of determination at step 268B is YES, of transmitting OK_REPLY to the communication terminal identified by the telephone number HISTNO; and a step 272B, following step 270B, of toggling the value of variable HISSTAT between 0 and 1 and toggling the color of second LED 156 between blue and red, and returning the control to step 350A.

The program further includes: a step 260F, executed if the result of determination at step 352A is YES, of determining whether or not the value of variable RDF is 0, and branching control flow depending on the result of determination; a step 420, executed if the result of determination at step 260F is YES, of determining whether or not REQUEST is received from the terminal identified by the telephone number CALLTNO and branching control flow depending on the result of determination; a step 422, executed if the result of determination at step 420 is YES, of transmitting OK_REPLY to the terminal identified by the telephone number CALLTNO; a step 358A, following step 422, of inputting telephone number CALLTNO, 1, 1 and 1 to variables HISTNO, MYSTAT, RDF and HISSTAT, respectively; a step 360A, following step 358A, of setting colors of first and second LEDs 154 and 156 both to blue; and a step 362A, following step 360A, of inputting the current time to variable ST, and returning the control to step 254 shown in Fig. 6.

The program further includes: a step 304E, executed if the result of determination at step 260F is NO, of determining whether the telephone number CALLTNO is the same as telephone number HISTNO, and branching control flow depending on the result of determination; a step 364B, executed if the result of determination at step 304E is NO, of setting the value of variable MYSTAT and the color of first LED 154 to 1 and blue, respectively; a step 308E, following step 364B, of transmitting CHG_STAT to the communication terminal identified by the telephone number HISTNO; and a step 310E, following step 308E, of waiting until OK_REPLY is received from the communication terminal identified by the telephone number HISTNO.

If the result of determination at step 352A is NO, the control returns to step 350A. If the result of determination at step 304E is YES, the control proceeds to step 362A. If the result of determination at step 420 is NO, or OK_REPLY is received at step 310E, the control returns to step 254 shown in Fig. 6.

### [Operation]

Referring to Figs. 1 to 10, communication terminal 110A in accordance with the present embodiment structured as described above operates in the following manner. It is assumed that, prior to the operation, a valid time width for a session is stored in advance in a variable PV of system variable storage unit 216.

When communication terminal 110A is activated, communication terminal 110A initializes variables HISTNO, MYSTAT, HISSTAT and ST, and inputs 0 to variable RDF (step 250 shown in Fig. 6. A state in which there is no other terminal to resume a call). Communication terminal 110A turns off both the first and second LEDs 154 and 156 (step 252 shown in Fig. 6). Communication terminal 110A displays a standby image on display 152 (step 254 shown in Fig. 6), and waits until the user of communication terminal 110A makes a call to another terminal or an incoming call is received from another terminal.

In the following, a state in which the value of variable RDF is 0 (there is no other terminal to resume a call), the standby image is displayed on display 152 and communication terminal 110A is waiting until the user of communication terminal 110A makes a call to another terminal or an incoming call is received from another terminal, will be referred to as the "initial state." Further, a state in which the value of variable RDF is 1 (there is a terminal to resume a call), and the standby image is displayed on display 152 and communication terminal 110A is waiting a call instruction from the user, an incoming call from another terminal, a user operation of pressing the call resuming button 166 or reception of CHG_STAT from another terminal will be referred to as the "redial waiting state."

In the following, operations of communication terminal 110A in four situations will be described: (1) in the initial state, the user of communication terminal 110A has a phone call with a telephone terminal 116A; (2) in the initial state, the user of communication terminal 110A has a phone call with a communication terminal 110B; (3) in the redial waiting state, the user of communication terminal 110A has a phone call with telephone terminal 116A; and (4) in the redial waiting state, the user of communication terminal 110A has a phone call with communication terminal 110B.

(1) Call between communication terminal 110A and telephone terminal 116A in the initial state.
Assume that the user of communication terminal 110A makes a call to telephone terminal 116A in the initial state (YES at step 256 shown in Fig. 6). The user presses ten keys 158 and thereby inputs the telephone number of telephone terminal 116A to communication terminal 110A, and communication terminal 110A inputs the input telephone number to variable CALLTNO (step 302 shown in Fig. 7). Communication terminal 110A calls telephone terminal 116A (step 312 shown in Fig. 7), and waits until an acknowledgment is received from telephone terminal 116A (step 314 shown in Fig. 7) or until a cut off button 160 is pressed by the user of communication terminal 110A (step 316 shown in Fig. 7).

If the user of communication terminal 110A presses cut off button 160 at step 316, communication terminal 110A stops calling (step 318 shown in Fig. 7), and the initial state is resumed.

At step 314, if there is an acknowledgment from telephone terminal 116A, the user of communication terminal 110A starts and continues a call with telephone terminal 116A until the user of communication terminal 110A presses cut off button 160 or a request of disconnection is made by telephone terminal 116A (step 350 shown in Fig. 8). Since the current value of variable HISTNO is NULL (there is no other terminal to resume a call), communication terminal 110A does not receive CHG_STAT during this call.

If the user of communication terminal 110A presses cut off button 160 or telephone terminal 116A makes a request for disconnecting the call (YES at step 352 shown in Fig. 8), communication terminal 110A transmits REQUEST to telephone terminal 116A (step 354 shown in Fig. 8). However, since telephone terminal 116A does not have the redialing function provided in communication terminal 110A, it cannot return OK_REPLY to communication terminal 110A. Confirming absence of OK_REPLY (YES at step 356 shown in Fig. 8), communication terminal 110A returns to step 254, at which the standby image is again displayed on display 152, and returns to the initial state.

Assume that while communication terminal 110A is in the initial state, a call to communication terminal 110A is received from telephone terminal 116A (YES at step 258 shown in Fig. 6).

Communication terminal 110A inputs the telephone number of telephone terminal 116A to variable CALLTNO (step 390 shown in Fig. 9), and waits until the user of communication terminal 110A presses call button 164 (step 392 shown in Fig. 9) or a signal stopping the call from telephone terminal 116A to communication terminal 110A is received from telephone terminal 116A (step 394 shown in Fig. 9).

If the signal stopping the call is received from telephone terminal 116A at step 394, communication terminal 110A returns to the initial state.

If the user of communication terminal 110A presses call button 164 at step 392, communication terminal 110A acknowledges call reception to telephone terminal 116A (step 396 shown in Fig. 9). The user of communication terminal 110A starts and continues a call with telephone terminal 116A until the user presses cut off button 160 or a request of disconnection is made by telephone terminal 116A (step 350A shown in Fig. 10). Since the current value of variable HISTNO is NULL (there is no other terminal to resume a call), communication terminal 110A does not receive CHG_STAT during this call.

If the user of communication terminal 110A presses cut off button 160 or telephone terminal 116A makes a request for disconnecting the call, communication terminal 110A confirms that REQUEST is not received (NO at step 420 shown in Fig. 10), and returns to the initial state.

(2) Call between communication terminal 110A and communication terminal 110B in the initial state.
Assume that a call to communication terminal 110A is made from communication terminal 110B in the initial state.

Communication terminal 110A stores the telephone number of communication terminal 110B, and waits until the user of communication terminal 110A presses call button 164, or a signal for stopping the call from communication terminal 110B to communication terminal 110A is received from communication terminal 110B.

If the user of communication terminal 110A presses call button 164, communication terminal 110A acknowledges call reception to communication terminal 110B. The user of communication terminal 110A continues the call with communication terminal 110B until the user presses cut off button 160 or a request of disconnection is made by communication terminal 110B.

If the user of communication terminal 110A presses cut off button 160 or communication terminal 110B makes a request for disconnecting the call, communication terminal 110B transmits REQUEST to communication terminal 110A. In response to reception of REQUEST transmitted by communication terminal 110B (YES at step 420 shown in Fig. 10), communication terminal 110A transmits OK_REPLY to communication terminal 110B (step 422 shown in Fig. 10). Communication terminal 110A inputs the telephone number of communication terminal 110B, 1, 1 and 1 to variables HISTNO, MYSTAT, RDF and HISSTAT, respectively (there is a terminal to resume a call, and call can be resumed between communication terminals 110A and 110B), and sets the color of first and second LEDs 154 and 156 both to blue (step 360A shown in Fig. 10). Communication terminal 110A inputs the current time in variable ST (establishing a session, step 362A shown in Fig. 10), and thereafter it enters a redial waiting state.

Assume that the user of communication terminal 110A makes a call to communication terminal 110B in the initial state.

The user of communication terminal 110A inputs the telephone number of communication terminal 110B through ten keys 158, then the communication terminal 110A makes a call to communication terminal 110B, and waits until an acknowledgment is received from communication terminal 110B or until the user of communication terminal 110A presses cut off button 160.

If the acknowledgment is received from communication terminal 110B, the user of communication terminal 110A starts and continues a call with communication terminal 110B until the user of communication terminal 110A presses cut off button 160 or a request of disconnection is made by communication terminal 110B Since the current value of variable HISTNO is NULL (there is no other terminal to resume a call), communication terminal 110A does not receive CHG_STAT during this call.

If the user of communication terminal 110A presses cut off button 160 or communication terminal 110B makes a request for disconnecting the call, communication terminal 110A transmits REQUEST to communication terminal 110B (step 354 shown in Fig. 8).

In response to reception of REQUEST from communication terminal 110A, communication terminal 110B transmits OK_REPLY to communication terminal 110A.

Receiving OK_REPLY transmitted from communication terminal 110B (NO at step 356 shown in Fig. 8), communication terminal 110A inputs the telephone number of communication terminal 110B, 1, 1 and 1 to variables HISTNO, MYSTAT, RDF and HISSTAT, respectively (there is a terminal to resume a call, and call can be resumed between communication terminals 110A and 110B, step 358 shown in Fig. 8), and sets the color of first and second LEDs 154 and 156 both to blue (step 360 shown in Fig. 8). Communication terminal 110A inputs the current time in variable ST (establishing a session, step 362 shown in Fig. 8), and thereafter it enters the redial waiting state.

(3) Call between communication terminal 110A and telephone terminal 116A in the redial waiting state.
The operation of communication terminal 110A in the redial waiting state will be described. In communication terminal 110A, it is assumed that variables HISTNO, MYSTAT, RDF, HISSTAT and ST are the telephone number of communication terminal 110B, 1, 1, 1 and the time when the session is established, and that the colors of first and second LEDs 154 and 156 are both blue.

Assume that the user of communication terminal 110A makes a call to telephone terminal 116A before expiration of the valid session time.

Communication terminal 110A stores the telephone number of telephone terminal 116A input by the user, inputs 0 to variable MYSTAT, and sets the color of first LED 154 to red (communication terminal 110A cannot resume a call, step 306 shown in Fig. 7). Communication terminal 110A transmits CHG_STAT to communication terminal 110B (step 308 shown in Fig. 7).

After receiving CHG_STAT transmitted from communication terminal 110A, communication terminal 110B transmits OK_REPLY to communication terminal 110A. Communication terminal 110B changes the color of second LED of communication terminal 110B from blue to red. Since the color of second LED is red, the user of communication terminal 110B can recognize that communication terminal 110A cannot resume the call.

After receiving OK_REPLY transmitted from communication terminal 110B (YES at step 310 shown in Fig. 7), communication terminal 110A makes a call to telephone terminal 116A and waits until an acknowledgment is received from telephone terminal 116A (step 314 shown in Fig. 7) or until a cut off button 160 is pressed by the user of communication terminal 110A (step 316 shown in Fig. 7).

If the user of communication terminal 110A presses cut off button 160 at step 316, communication terminal 110A stops calling. Communication terminal 110A inputs 1 to variable MYSTAT, and sets the color of second LED to blue (step 320 shown in Fig. 7). Communication terminal 110A transmits CHG_STAT to communication terminal 110B (step 308A shown in Fig. 7).

After receiving CHG_STAT transmitted from communication terminal 110A, communication terminal 110B transmits OK_REPLY to communication terminal 110A. Communication terminal 110B changes the color of second LED of communication terminal 110B from red to blue. Since the color of second LED is blue, the user of communication terminal 110B can recognize that communication terminal 110A can resume the call.

After receiving OK_REPLY transmitted from communication terminal 110B (YES at step 310A shown in Fig. 7), communication terminal 110A returns to the redial waiting state.

If an acknowledgment is received from telephone terminal 116A at step 314 described above, the user of communication terminal 110A starts a call with telephone terminal 116A.

If communication terminal 110B starts a call with other terminal while communication terminal 110A is in a call with telephone terminal 116A, communication terminal 110B transmits CHG_STAT to communication terminal 110A. Every time CHG_STAT from communication terminal 110B is received (YES at step 268A shown in Fig. 8), communication terminal 110A transmits OK_REPLY to communication terminal 110B (step 270A shown in Fig. 8), and toggles the value of variable HISSTAT and the color of second LED 156 (step 272A shown in Fig. 8).

When the call between communication terminal 110A and telephone terminal 116A ends, communication terminal 110A changes the value of variable MYSTAT and the color of first LED to 1 and blue, respectively (step 364 shown in Fig. 8, a state in which communication terminal 110A can resume a call), and transmits CHG_STAT to communication terminal 110B (step 308B shown in Fig. 8).

Receiving CHG_STAT from communication terminal 110A, communication terminal 110B sets the color of second LED of communication terminal 110B to blue, and transmits OK_REPLY to communication terminal 110A.

Receiving OK_REPLY from communication terminal 110B (YES at step 310B shown in Fig. 8), communication terminal 110A returns to the redial waiting state.

Assume that a call to communication terminal 110A from telephone terminal 116A is received before expiration of the valid session time while communication terminal 110A is in the redial waiting state. Here, in communication terminal 110A, it is assumed that variables HISTNO, MYSTAT, RDF, HISSTAT and ST are the telephone number of communication terminal 110B, 1, 1, 1 and the time when the session is established, and that the colors of first and second LEDs 154 and 156 are both blue.

Communication terminal 110A stores the telephone number of telephone terminal 116A, inputs 0 to variable MYSTAT, and sets the color of first LED 154 to red (communication terminal 110A cannot resume a call, step 306A shown in Fig. 9). Communication terminal 110A transmits CHG_STAT to communication terminal 110B (step 308C shown in Fig. 9).

After receiving CHG_STAT transmitted from communication terminal 110A, communication terminal 110B transmits OK_REPLY to communication terminal 110A.

After receiving OK_REPLY transmitted from communication terminal 110B (YES at step 310C shown in Fig. 9), communication terminal 110A waits until the user of communication terminal 110A presses call button 164 (step 392 shown in Fig. 9) or a signal stopping the call from telephone terminal 116A to communication terminal 110A is received from telephone terminal 116A (step 394 shown in Fig. 9).

If the signal for stopping the call is received from telephone terminal 116A at step 394, the value of variable MYSTAT and the color of first LED are set to 1 and blue, respectively (communication terminal 110A can resume the call, step 364A shown in Fig. 9), and CHG_STAT is transmitted to communication terminal 110B (step 308D shown in Fig. 9).

Receiving CHG_STAT from communication terminal 110A, communication terminal 110B sets the color of second LED of communication terminal 110B to blue, and transmits OK_REPLY to communication terminal 110A.

Receiving OK_REPLY from communication terminal 110B (YES at step 310D shown in Fig. 9), communication terminal 110A returns to the redial waiting state.

If the user of communication terminal 110A presses call button 164 at step 392 described above, the user of communication terminal 110A starts communication with telephone terminal 116A.

It is possible that CHG_STAT from communication terminal 110B is transmitted to communication terminal 110A while communication terminal 110A is in a call with telephone terminal 116A. Every time CHG_STAT from communication terminal 110B is received (YES at step 268B shown in Fig. 10), communication terminal 110A transmits OK_REPLY to communication terminal 110B (step 270B shown in Fig. 10), and toggles the value of variable HISSTAT and the color of second LED 156 (step 272B shown in Fig. 10).

When the call between communication terminal 110A and telephone terminal 116A ends, communication terminal 110A changes the value of variable MYSTAT and the color of first LED to 1 and blue, respectively (step 364B shown in Fig. 10, a state in which communication terminal 110A can resume a call), and transmits CHG_STAT to communication terminal 110B (step 308E shown in Fig. 10).

Receiving CHG_STAT from communication terminal 110A, communication terminal 110B sets the color of second LED of communication terminal 110B to blue, and transmits OK_REPLY to communication terminal 110A.

Receiving OK_REPLY from communication terminal 110B (YES at step 310E shown in Fig. 10), communication terminal 110A returns to the redial waiting state.

If communication terminal 110A is in the redial waiting state and the valid session time expires (YES at step 262 shown in Fig. 6), communication terminal 110A inputs NULL to variable ST (invalidates session, step 264 shown in Fig. 6), and returns to the initial state.

(4) Call between communication terminal 110A and communication terminal 110B in the redial waiting state.
Assume that the value of variable HISSTAT is 1 (communication terminal 110B can resume a call) and the user of communication terminal 110A makes a call to telephone terminal 116A before expiration of the valid session time. In communication terminal 110A, it is assumed that values of variables HISTNO, MYSTAT, RDF, HISSTAT and ST are the telephone number of communication terminal 110B, 1, 1, 1 and the time when the session is established, and that the colors of first and second LEDs 154 and 156 are both blue.

Communication terminal 110A calls communication terminal 110B, and waits until an acknowledgment is received from communication terminal 110B (step 314 shown in Fig. 7) or until a cut off button 160 is pressed by the user of communication terminal 110A (step 316 shown in Fig. 7).

If cut off button 160 is pressed at step 316, communication terminal 110A returns to the redial waiting state.

If an acknowledgment is received from communication terminal 110B at step 314, the user of communication terminal 110A starts a call with communication terminal 110B. After the end of the call, communication terminal 110A updates the valid session time (step 362 shown in Fig. 8), and returns to the redial waiting state.

The operation when the value of variable HISSTAT is 1 and the user of communication terminal 110A presses the call resuming button before expiration of valid session time (YES at step 266 shown in Fig. 6) is the same as the operation when the value of variable HISSTAT is 1 and the user of communication terminal 110A makes a call to telephone terminal 116A before expiration of valid session time.

Assume that the value of variable HISSTAT is 1 and a call from communication terminal 110B to communication terminal 110A is received.

Communication terminal 110A waits until the user of communication terminal 110A presses call button 164 (step 392 shown in Fig. 9), or a signal stopping the call from telephone terminal 116A to communication terminal 110A is received from telephone terminal 116A (step 394 shown in Fig. 9).

If the signal for stopping is received at step 394, communication terminal 110A returns to the redial waiting state.

If the user presses call button 164 at step 392, the user of communication terminal 110A starts a call with communication terminal 110B. After the end of the call, communication terminal 110A updates the valid session time (step 362A shown in Fig. 10), and returns to the redial waiting state.

Assume that the value of variable HISSTAT is 0 (communication terminal 110B cannot resume a call), and the user of communication terminal 110A presses the call resuming button before expiration of valid session time (YES at step 266 shown in Fig. 6).

Here, communication terminal 110A outputs an error sound (step 276 shown in Fig. 6), and returns to the redial waiting state.

In the foregoing, the operation of communication terminal 110A in accordance with the present embodiment has been described taking four typical examples. From the description above and the configurations described first, the operations of communication terminal 110A in other situations would be apparent to a person skilled in the art.

### [EFFECTS OF THE EMBODIMENT]

As is apparent from the description above, by using communication terminal 110A in accordance with the present embodiment, if a call between communication terminals 110A and 110B is once stopped and the user of communication terminal 110A makes or receives a call to/from a third party, communication terminal 110A transmits CHG_STAT to communication terminal 110B, notifying communication terminal 110B that resuming the call is impossible. Therefore, the user of communication terminal 110B can recognize that the user of communication terminal 110A is busy at the moment and cannot resume the call. Therefore, while the call is stopped, the user of communication terminal 110B may not be displeased. Whether the user of communication terminal 110B makes a call to other terminal or terminals is at the discretion of the user.

Further, if the user of communication terminal 110B is in a call with a third party while the call is once stopped, the color of second LED 156 turns red, and if the user is not in a call, the color of second LED 156 turns blue. Therefore, the user of communication terminal 110A can recognize that the user of communication terminal 110B cannot resume the call at present, and he/she can appropriately determine when to resume the call by checking the color of second LED 156.

Further, when a call is stopped, communication terminal 110A establishes a session and while the session is established, both the first and second LEDs 154 and 156 are lit. While the first and second LEDs 154 and 156 are on, the user is in a suspended state to resume the call by himself/herself or to refrain from making a call to a third party to be ready for the instruction to resume a call from communication terminal 110B. If such a suspended state lasts long, it is mentally stressful to the user. When a session is discarded by communication terminal 110A, both the first and second LEDs 154 and 156 are turned off and, therefore, the user can recognize that the on-hold state ended. Thus, the user is free from the stressful feelings.

### [Modification]

Though communication terminal 110 and telephone terminal 116 are portable telephones in the embodiment described above, the present invention is not limited to such an embodiment, and it may be applicable to a personal portable information terminal such as a PHS (Personal Handyphone System) and a PDA (Personal Digital Assistant).

In the embodiment above, communication terminal 110A changes the color of first LED 154 to notify the user whether or not the communication terminal 110A is capable of resuming a call. Further, communication terminal 110A changes the color of second LED 156 to notify the user of communication terminal 110A whether or not the terminal of the other party of the call is capable of resuming a call. The present invention, however, is not limited to such an embodiment and the state of each terminal may be notified to the user by sound output with the sound volume changed. Alternatively, a vibrator may be incorporated in communication terminal 110A, and the state of each terminal may be notified to the user by vibrating communication terminal 110A with the magnitude of vibration changed during a call.

In the embodiment above, communication terminal 110A resumes a call when the user of communication terminal 110A presses call resuming button 166. The present invention, however, is not limited to such an embodiment. The user may be asked to input a password and if the input password matches a character sequence set in advance by the user, the call may be resumed. Further, the user may be asked to input his/her voice to a microphone, and if the input voice pattern matches the voice pattern registered in advance through voice recognition technique, the call may be resumed.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### INDUSTRIAL APPLICABILITY

The present invention is applicable to the industrial field related to communication equipment, manufacturing, selling or leasing communication equipment having the redialing function that alleviates mental burden on the users.

## Claims

1. A communication terminal, comprising:
a storage;
calling means for allowing a user to make and receive a call to/from other terminal;
communicating means for communicating with other terminal;
identifier storing means for storing an identifier of other terminal with which a call through said calling means has ended, in said storage;
call control means, responsive to an instruction from said user, for controlling said calling means to enable a call with other terminal corresponding to the identifier stored in said storage;
state obtaining means for obtaining a state of the other terminal corresponding to the identifier stored in said storage through said communicating means;
notifying means for notifying said user of the state obtained by said state obtaining means; and
validating means for validating or invalidating said call control means in accordance with the state obtained by said state obtaining means.

2. The communication terminal according to claim 1, wherein
said communication terminal further includes a housing containing said storage, said calling means, said communicating means, said identifier storing means, said call control means, said state obtaining means, said notifying means and said validating means;
said notifying means includes
a first light source unit, provided on said housing and capable of emitting light to the outside of said housing, and
light emission control means for changing color of light emitted by said first light source unit in accordance with the state obtained by said state obtaining means.

3. The communication terminal according to claim 2, wherein
said state obtaining means includes transition signal obtaining means for obtaining a state transition signal through said communicating means from the other terminal corresponding to the identifier stored in said storage, indicating that the state of said the other terminal has toggled between a state in which a call to/from said communication terminal is possible and a state in which the call is impossible.

4. The communication terminal according to claim 3, wherein
said light emission control means includes means, responsive to said transition signal obtaining means obtaining said state transition signal, for changing the color of light emitted by said first light source unit, depending on whether the other terminal as the transmission source of said state transition signal is in a state in which a call to/from said communication terminal is possible or in a state in which the call is impossible.

5. The communication terminal according to claim 4, wherein
said first light source unit is capable of switching between two colors of light to be emitted; and
said means for changing includes means, responsive to said transition signal obtaining means obtaining said state transition signal, for causing said first light source unit to emit light with said two colors switched, depending on whether or not the other terminal as the transmission source of said state transition signal is in a state in which a call to/from said communication terminal is possible.

6. The communication terminal according to claim 2, further comprising
a second light source unit, provided on said housing and capable of emitting light to the outside of said housing, and
means for changing the color of light emitted by said second light source unit, depending on whether or not said communication terminal is in a state in which a call to/from the other terminal corresponding to the identifier is possible, while the identifier is stored in said storage.

7. The communication terminal according to claim 6, further comprising:
time counting and determining means for determining whether a prescribed time period has passed from when said identifier storing means stored the identifier in said storage; and
means for invalidating said call control means, and for turning off said first and second light source units, in accordance with result of determination by said time counting and determining means.

8. The communication terminal according to any of claims 1, 6 and 7, wherein
said state obtaining means includes transition signal obtaining means for obtaining a state transition signal through said communicating means from the other terminal corresponding to the identifier stored in said storage, indicating that the state of said the other terminal has toggled between a state in which a call to/from said communication terminal is possible and a state in which the call is impossible.

9. The communication terminal according to claim 8, wherein
said validating means includes means for validating or invalidating said call control means, depending on whether the state transition signal obtained by said transition signal obtaining means indicates that the state of the other terminal has toggled from the state in which a call to/from said communication terminal is impossible to the state in which the call is possible.

10. The communication terminal according to any of claims 1 to 5, further comprising
own terminal state notifying means for notifying said user whether or not said communication terminal is in a state in which a call to/from the other terminal corresponding to the identifier is possible or in a state in which the call is impossible while the identifier is stored in said storage.

11. The communication terminal according to claim 10, wherein
said own terminal state notifying means includes means, responsive to a start of a call by the user to/from a terminal different from the other terminal corresponding to the identifier using said calling means while the identifier is stored in said storage, for notifying the user that the communication terminal is in a state in which a call to/from the other terminal corresponding to the identifier is impossible.

12. The communication terminal according to claim 10, further comprising
means, responsive to a start of a call by the user to/from a terminal different from the other terminal corresponding to the identifier using said calling means while the identifier is stored in said storage, for transmitting to the other terminal corresponding to the identifier, a state transition signal indicating that the state of said communication terminal has toggled from a state in which a call to/from the other terminal corresponding to the identifier is possible to a state in which the call is impossible.

13. The communication terminal according to any of claims 1 to 6, further comprising
time counting and determining means for determining whether a prescribed time period has passed from when said identifier storing means stored the identifier in said storage; and
means for invalidating said call control means in accordance with the result of determination by said time counting and determining means.

14. The communication terminal according to claim 13, further comprising
means for notifying said user of the result of determination by said time counting and determining means.

15. A communication terminal, comprising
a storage;
calling means for allowing a user to make and receive a call to/from other terminal;
identifier storing means for storing an identifier of other terminal with which a call through said calling means has ended, in said storage;
call control means, responsive to an instruction from said user, for controlling said calling means to enable a call with other terminal corresponding to the identifier stored in said storage;
time counting means for determining whether a prescribed time period has passed from when said identifier storing means stored the identifier in said storage;
notifying means for notifying said user of the result of determination by said time counting means; and means for validating or invalidating said call control means in accordance with the result of determination by said time counting means.
